# EUROPEAN PATENT APPLICATION

(11) **EP 2 455 256 A1**
(43) Date of publication of application: **23.05.2012**
(21) Application number: 11190190.6
(22) Date of filing: 22.11.2011
(51) Int. Cl.: B60P 3/39

(54) **Mechanical stop device for adjusting the vertical position of a bed in a recreational vehicle**

(30) Priority: 23.11.2010 IT PI20100132
(71) Applicant: ST.LA.Srl, 56025 Pontedera (PI) (IT)
(72) Inventor: Zappolini, Stefano, 56020 Montopoli V.A. (PI) (IT)
(74) Representative: Leotta, Antonio

(57) **Abstract**

A mechanical stop device for securing the vertical position of a bed in a recreational vehicle is advantageously used when the bed is supported by a lifting mechanism in the form of kinematic structure mainly composed of substantially rigid members for vertically translating the bed. The mechanical stop device comprises at least a sliding locking member (41) which is designed to engage vertically aligned housings of a housing member (50) integral to the chassis of the vehicle. The mechanical stop device allows to secure the bed at several vertical positions corresponding to the positions of said housings.

## Description

### Technical Field

the present invention relates to a device for securing the vertical position of beds supported by supporting mechanisms having substantially rigid members, in recreational vehicles such as campers, leisure boats, or the like.

### Background Art

Supporting structures for beds are known, in the field of camping vehicles and leisure boats, which are designed for keeping the beds at a raised position where they do not occupy the internal volume of the vehicle when they are not in use and for moving them into a lower position at an in use position. The above supporting structures can be categorized in two different types of structures: lift mechanism with belts and lift mechanisms having substantially rigid members.

In supporting structures of the first type, which are disclosed, for instance, in US 1,063,906, in US 5,984,404 and in US 2007/0226901 A1, supporting belts turn about pulleys and are wound and unwound about tubular members by manual or motorized winch means for causing them to slide with regard to the bed's frame. Thanks to this mechanisms the bed is lifted or lowered and it is easy to adjust its height by providing means for preventing the rotation of the tubular members where the belts are wound. In particular, the italian patent application n. PI2010A000050, in the name of the same applicant, describes a safety device for effectively preventing the unwinding movement of the belts in this type of beds.

Differently, supporting structures of the second type comprise supporting structures having swinging arms, usually two arms at each side of the bed, rotating between a substantially horizontal position in which the bed is kept close to the top wall of the vehicle and a substantially vertical position in which the bed is lowered at an in use position. The arms rotates while remaining parallel each other, so that the bed is kept in the horizontal configuration. Such structure is quite simple but it needs a relevant free space to perform the movement.

Another supporting structure of this second type comprises scissor type mechanisms which allows lifting and lowering the bed while keeping it in a horizontal configuration. This kind of supporting structures need fewer free space for lifting and lowering the bed.

The second type of supporting structures also comprise the supporting structure disclosed in EP 2,158,824 A1, in the name of the same applicant, in which a mechanism is disclosed having substantially rigid members for vertically translating the bed.

The mechanisms of the second type are suitable for moving the bed between a first position, or lifted position, or not in use position, and a second position, or lowered position, or in use position, without giving the chance of stopping the movement at an intermediate position which can be made stable. It is so advisable, to find solutions allowing a bed supported by a lifting mechanism made of substantially rigid members to be stopped and effectively secured at several heights during its vertical run.

### Summary of invention

It is main object of the present invention to propose a device for securing the vertical position of beds for recreational vehicles supported by lifting mechanisms comprising substantially rigid members which translate the bed in a vertical direction.

It is further object of the present invention to propose a device for securing the vertical position of beds for recreational vehicles supported by lifting mechanisms comprising substantially rigid members which translate the bed in a vertical direction, the device being able of effectively locking the bed at specific vertical positions.

It is another object of the present invention to propose a device for securing the vertical position of beds for recreational vehicles which is very simple and cheap and it does not make more complex the structure of the lifting mechanism.

The above objects are attained by a mechanical stop device for adjusting the vertical position of a bed in a recreational vehicle, in which said bed is bound to a supporting and driving mechanism comprising kinematic structures composed of substantially rigid members adapted to vertically move said bed, and wherein said mechanical stop device comprises at least a locking member bound for longitudinally slide along a first side member of the frame of the bed, so that it defines a locking position in which said locking member protrudes outside a side member of the frame which is perpendicular to the first side member and a release position in which the locking member is comprised within the plant overall dimensions of the frame; at least a housing member bound to a fixed frame of the recreational vehicle so that it faces the second side member of the frame and it is provided with a plurality of vertically aligned housings for housing the locking member when, in its locking position, it engages one of the housings; and a control member connected to the locking member for sliding the locking member itself between the locking position and the release position.

Thanks to the above outlined device, which has a very simple structure, the bed can be secured at several vertical positions without making more complex the structure of the lifting mechanism.

The device advantageously comprises at least an elastic member acting upon the locking member for moving it towards the locking position.

Still advantageously the device comprises at least two locking members placed at opposite ends of the first side member, and they protrude outside opposite side members of the frame, the locking members being moved at a same time by a same control member between a locking position and a release position.

The control member comprises a sliding handle connected to the locking member/s by at least e flexible inextensible cable passing about roll members.

The control member is placed on the external side of a side member of the frame opposite to the first side member.

Alternatively, the control member could comprise a lever oscillating between two stable positions corresponding to the locking position of the locking member and to the release position of the locking member.

Advantageously the bed for recreational vehicles is supported by at least a supporting structure bound at one end to a steady structure of the vehicle and at the opposite end to a side member of the frame of the bed, the supporting structure comprising at least two first bars pivoting about fixed hinge means and connected each other by first linking means adapted to set a connection between the angles of rotation of said first bars about said hinge means; at least at least two further bars pivoting about hinge means linking them to the first bars, said further bars being further connected to the ends of the bed; and constraining means adapted to set a connection between the angle of rotation of the first bars about their fixed hinge means and the angle of rotation of the further bars about the respective hinge means linking them to the first bars, so that the bed vertically move remaining in a horizontal configuration.

The above constraining means comprise second linking means apt to set a connection between the angles of rotation of the further bars about their respective hinge means and third linking means apt to connect the first bar to the further bar.

### Brief description of drawings

Fig. 1 is a perspective view of a frame of a bed for recreational vehicles comprising a device according to the present invention.
Fig. 2 is broken top view of the bed of fig. 1.
Fig. 3 is a top view similar to fig. 2 showing a different embodiment of the device of the present invention.
Fig. 4 is a top view similar to fig. 2 showing another different
embodiment of the device of the present invention.

### Description of embodiments

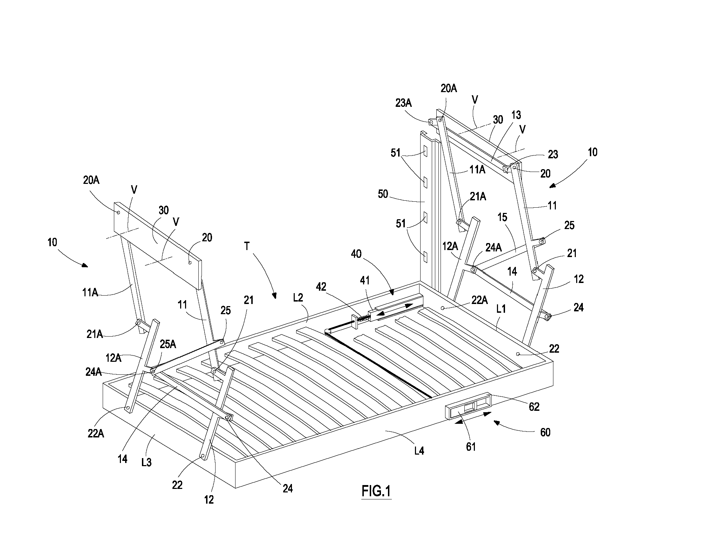

In fig. 1 it is shown a frame of a bed, T, bound at two opposite side members, L1, L3, to two supporting and driving mechanisms, 10, bound on their turn by constraining means, V, to the chassis of a recreational vehicle. The supporting and driving mechanisms 10 are composed of substantially rigid members which form a planar kinematic structures by which the bed is vertically translated while it remains in a horizontal configuration.

Each supporting and driving mechanism 10 comprises a plate, 30, for securing it to the chassis of the vehicle by constraining means V, not represented; two first bars, 11, 11A, hinged at one end, by hinge means, 20, 20A, thereof, to the plate 30, at a predefined distance therebetween.

At the other ends of the bars 11 and 11A are hinged by hinge means 21, 21A, the ends of two further bars 12, 12A.

The side member L1 or L3 of the frame T of the bed is bound to the supporting mechanism at the other ends of the bars 12 and 12A.

First linking means, in the shape of a bar 13 are hinged by hinge means 23, 23A, to the bars 11 and 11 creating a relationship between the rotation of the bar 11 and the rotation of the bar 11A. In particular, the hinge means 23 and 23A are placed so that the first bars 11 and 11A rotate while they remain parallel each other.

In a similar way, second linking means, in the shape of the bar 14 are hinged by hinge means 24, 24A, to the bars 12 and 12A creating a relationship between the rotation of the bar 12 and the rotation of the bar 12A. Also in this case the bars 12 and 12A are kept parallel each other by the linking means 14.

Third linking means, in the shape of a curved bar, 15, which is hinged by hinge means 25, 25A at one end to the bar 12 and at its other end to the bar 11A. The third linking means create a relationship between the rotation of the bar 11A and the rotation of the bar 12, in particular by constraining a point of the bar 12 which is the axis defined by the hinge means 25 at rotating about a point on the bar 11A which is the axis defined by the hinge means 25A. Thanks to the geometry of the kinematic system, upon rotation of the bars 11 and 11A about their hinge means 20 and 20A the hinge means 22 and 22A where the frame T is bound to the supporting members move together in the vertical direction so that the bad is vertically moved while it remains in the horizontal configuration.

Obviously, the above described supporting and driving mechanism could be replaced with different supporting and driving mechanism having the same function of vertically translating the bed, such as scissor type lifting mechanisms in which a lifting mechanism is made of substantially rigid bars hinged together at an intermediate position and bound at their ends, by hinge means and slide means, on one side to the chassis of the vehicle, and on the other side to a side member of the frame of the bed.

in any case, each supporting and driving mechanism 10, or a functionally similar scissor type mechanism, can be easily provided with end of stroke elements for determining a raised position and a lowered position of the frame T of the bed. On the contrary, with this kind of lifting mechanisms it would be more difficult to provide intermediate stop positions. The problem is addressed in a very simple, effective and reliable way by means of a mechanical stop device, 40, according to the present invention, which comprises a locking member, 41, bound for longitudinally slide along a side member, L2, of the frame T of the bed, and adapted to engage housings, 51, provided in a housing member, 50.

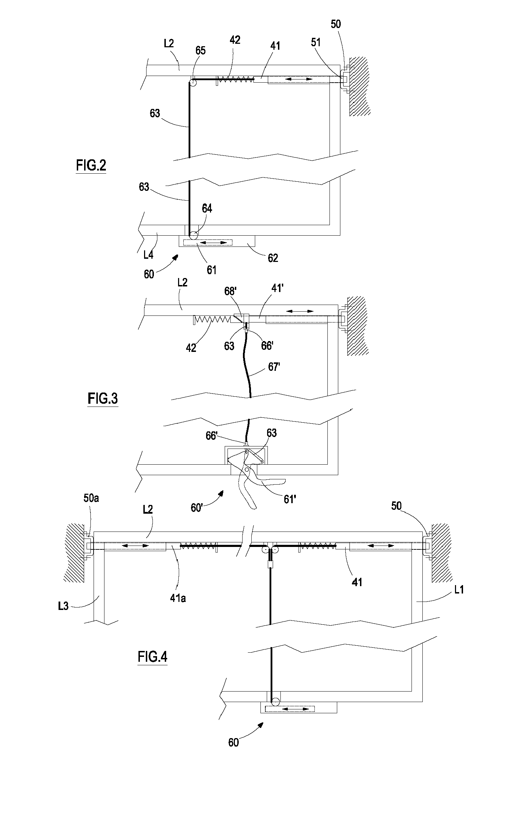

The sliding movement of the locking member 41 is controlled by a control member, 60, and by elastic means, 42, biasing the locking member towards the locking position, shown in fig. 2, in which the locking member pass through an aperture made in the side member L1 which is perpendicular to the side member L2, partially protrudes outside the external side of the side member L1, and then engages a hosing 51 of the housing member 50 integral to the chassis of the vehicle.

The control member 60 comprises a handle, 61, sliding in a rail member, 62, integral to the side member, L4, opposite to the side member L2 where is constrained the locking member L2. The handle 61 is connected to the locking member 41 by a flexible inextensible cable, 63, properly kept under tension by roll members, 64, 65, bound for freely rotating to the side member L4 and L2 respectively.

The housing member 50 is a vertically elongated member integral to the wall of the recreational vehicle, and the housings 51 are aligned at a predefined mutual distance so that each housing defines a stop position of the frame T of the bed at a certain vertical position. In the embodiment of fig. 2 the locking member 41 is an elongated member having a rectangular section and the housings 51 are apertures of a matching shape and a slightly greater size. Certainly the locking member could also have a section of any shape and the housings 51 could be of any shape suitable for preventing the upwards and/or downwards movements of the locking member 41.

In fig. 3 it is shown a different embodiment of the mechanical stop device of the present invention in which , in particular, the control member, 60', has been changed. In this embodiment, the control member 60' comprises a lever type handle, 61', swinging about a vertical axis between two substantially stable positions corresponding to the locking position of the locking member 41 and to the release position of the locking member 41, which is represented in fig. 3 with broken line. The handle 61' is connected to a flexible inextensible cable, 64, that, between two restraining members, 66', slides inside a sheath, 67'. When the cable 64 is pulled a sliding member, 68', moves in the direction perpendicular to the side member L2, and thanks to a sloping plane it causes a movement of the locking member 41' in the direction of the side member L2. The spring 42 biases the locking member 41' towards the locking position. Nevertheless the locking member 41' cannot go back to the locking position until the handle 61' is moved from the stable position shown with broken line.

Obviously, further solutions can be provided for controlling the movement of the locking member 41 within the subject matter of the present invention.

In addiction, a plurality of locking members could be provided for engaging a same number of housing members. For instance, in fig. 4, it is shown an embodiment in which a second locking member 41 a is provided at the opposite longitudinal end of the side member L2 for protruding from the external side of the side member L3 and engaging housings of a second housing member, 50a. The locking members 41 and 41 are advantageously bound to the side member opposite to the side member where the control member 60 is bound since the control member has to be in a region which can be easily accessible while the locking members has to be possibly placed in a hidden region. Nevertheless, locking members could also be provided for sliding along the side member L4, that is the same side member where the control means is placed.

## Claims

1. Mechanical stop device for adjusting the vertical position of a bed in a recreational vehicle, in which said bed is bound to a supporting and driving mechanism comprising kinematic structures composed of substantially rigid members adapted to vertically move said bed, **characterized in that** it comprises at least a locking member (41) bound for longitudinally slide along a first side member (L2) of the frame (T) of said bed, so that it defines a locking position in which said locking member (41) protrudes outside a side member (L1) of said frame (T) which is perpendicular to said first side member (L2), and a release position in which said locking member (41) is comprised within the plant overall dimensions of said frame (T); at least a housing member (50) bound to a fixed frame of said recreational vehicle so that it faces said second side member (L1) of said frame (T) and it is provided with a plurality of vertically aligned housings (51) for housing said locking member (41) in order to prevent vertical movement of said locking member (41) when, in its locking position, it engages one of said housings (51); and a control member (60) connected to said at least one locking member (41) for sliding said locking member (41).

2. Mechanical stop device according to claim 1 **characterized in that** it comprises at least an elastic member (42) acting upon said locking member (41) for moving it towards said locking position.

3. Mechanical stop device according to claim 1 or 2 **characterized in that** it comprises at least two of said locking members (41, 41 a) placed at opposite ends of said first side member (L2), and they protrude outside opposite side members (L1, L3) of said frame (T), said locking members (41, 41 a) being moved at a same time by a same control member (60).

4. Mechanical stop device according to any preceding claim **characterized in that** said control member (60) is placed on the external side of a side member (L4) of said frame (T) opposite to said first side member (L2).

5. Mechanical stop device according to any preceding claim **characterized in that** said control member (60) comprises a sliding handle (61) connected to said locking member (41) by at least a flexible inextensible cable (63) passing about roll members (64, 65).

6. Mechanical stop device according to any claim 1 to 5 **characterized in that** said control member (60') comprises a lever (61') oscillating between two stable positions corresponding to said locking position of said locking member (41') and to said release position of said locking member (41').

7. Mechanical stop device according to any preceding claim **characterized in that** said bed for recreational vehicles is supported by at least one supporting and driving mechanism (10) bound at one end to a steady structure of said vehicle and at the opposite end to a side member (L1, L3) of the frame (T) of said bed, said structure (10) comprising at least two first bars (11, 11A) pivoting about fixed hinge means (20, 20A) and connected each other by first linking means (13) adapted to set a connection between the angles of rotation of said first bars (11, 11A) about said hinge means (20, 20A); at least two further bars (12, 12A) pivoting about hinge means (21, 21A) linking them to said first bars (11, 11A), said further bars (12, 12A) being further connected to the ends of said bed or furniture; and constraining means adapted to set a connection between the angle of rotation of said first bars (11, 11A) about their fixed hinge means (20, 20A) and the angle of rotation of said further bars (12, 12A) about the respective hinge means (21, 21A) linking them to said first bars (11, 11A), so that said bed vertically move remaining in a horizontal configuration.

8. Mechanical stop device according to the previous claim **characterized in that** said constraining means comprise second linking means (14) apt to set a connection between the angles of rotation of said further bars (12, 12A) about their respective hinge means (21, 21A) and third linking means (15) apt to connect said first bar (11A) to said further bar (12).

9. Mechanical stop device according to any claim 1 to 6 **characterized in that** said bed for recreational vehicles is supported by two scissor type supporting and driving mechanisms, each bound at one end to a steady structure of said vehicle and at the opposite end to a side member (L1, L3) of the frame (T) of said bed.
